# EUROPÄISCHE PATENTANMELDUNG

(11) **EP 4 513 698 A1**
(43) Veröffentlichungstag der Anmeldung: **26.02.2025**
(21) Anmeldenummer: 23192684.1
(22) Anmeldetag: 22.08.2023
(51) Int. Cl.: H02J 1/10, H01M 10/42, H01M 10/48, H02J 7/00, H02M 1/00, H02M 7/797, H01M 10/44

(54) **FORMIEREN VON AUFLADBAREN BATTERIEZELLEN MITTELS EINER ENERGIEQUELLE**

(71) Anmelder: Siemens Aktiengesellschaft, 80333 München (DE)
(72) Erfinder: Mondal, Gopal, 91058 Erlangen (DE); Nielebock, Sebastian, 91301 Forchheim (DE)
(74) Vertreter: Siemens Patent Attorneys

(57) **Zusammenfassung**

Die Erfindung betrifft eine Einrichtung (40) zum Formieren von aufladbaren Batteriezellen (32) mittels einer Energiequelle, die ein mehrphasiges Wechselspannungsnetz (18) bereitstellt, mit:
- einem Energiequellenanschluss (42) zum elektrischen Anschließen jeweiliger Phasen des mehrphasigen Wechselspannungsnetzes (18), der für jede Phase einen Phasenanschluss (44, 46, 48) aufweist,
- mehreren Formierungsreihenschaltungen (50), die jeweils einen ersten und einen zweiten Schaltungsanschluss (52, 54) aufweisen, wobei die Schaltungsanschlüsse (52, 54) jeweils mit einer Reihenschaltung aus einer Reihenschaltungsinduktivität (56) und einer Mehrzahl von Formierungsmodulen (60) zum Formieren von aufladbaren Batteriezellen (32) elektrisch verbunden sind, wobei jedes Formierungsmodul (60) einen Zellenanschluss (74) zum lösbaren elektrischen Verbinden mit einer jeweiligen Batteriezelle (32) aufweist,
- wobei jeder Phasenanschluss (44, 46, 48) mit dem ersten Schaltungsanschluss (52) von wenigstens einer der Formierungsreihenschaltungen (50) elektrisch gekoppelt ist.

## Beschreibung

Die Erfindung betrifft ein Formierungsmodul für eine Einrichtung zum Formieren von aufladbaren Batteriezellen. Darüber hinaus betrifft die Erfindung eine Einrichtung zum Formieren von aufladbaren Batteriezellen mittels einer Energiequelle, die ein mehrphasiges Wechselspannungsnetz bereitstellt.

Einrichtungen zum Formieren von aufladbaren Batteriezellen sind im Stand der Technik umfänglich bekannt, sodass es eines gesonderten druckschriftlichen Nachweises hierfür dem Grunde nach nicht bedarf. Das Formieren beziehungsweise die Formation von Batteriezellen betrifft einen Vorgang beim Herstellen der Batteriezellen, bei dem die Batteriezellen bereits einen Teil des Fertigungsprozesses durchlaufen haben und mit einem Elektrolyten befüllt sind. In der Regel wird durch das Formieren der Batteriezelle erreicht, dass die Batteriezelle ihre gewünschten elektrischen Eigenschaften für den bestimmungsgemäßen Gebrauch erreicht. Die Formation beziehungsweise das Formieren bezeichnet demnach einen oder mehrere erste Auflade- und/oder Entladevorgänge der Batteriezelle, vorzugsweise unter vorgegebenen Randbedingungen, sodass sich die Elektroden, beispielsweise deren Oberflächen in Verbindung mit dem Elektrolyten in einer vorgegebenen Weise ausbilden, damit die gewünschten elektrischen Eigenschaften erreicht werden können. Eine Randbedingung kann zum Beispiel eine Temperatur der Batteriezelle, eine Anzahl der Auflade- und/oder Entladevorgänge oder dergleichen sein. Die Batteriezelle kann zum Beispiel eine Lithium-Ion-Zelle, eine Blei-Säure-Zelle, eine Nickel-Cadmium-Zelle oder dergleichen sein. Insbesondere in Bezug auf Lithium-Ion-Zellen wird durch das Formieren das Ausbilden einer SEI-Schicht erreicht, die die späteren Eigenschaften der Batteriezelle in der Regel maßgeblich mitbestimmt. Der Formierungsprozess für Batteriezellen kann einen Zeitaufwand bis zu etwa 24 Stunden erfordern. Darüber hinaus ist ein nicht unerheblicher Energieaufwand erforderlich. Es ist daher mittlerweile bekannt, Formierungseinrichtungen bereitzustellen, mittels welchen Batteriezellen nicht nur mit elektrischer Energie aus einer elektrischen Energiequelle zum Durchführen des Formierens aufgeladen werden können, sondern es kann darüber hinaus vorgesehen sein, dass bei einem entsprechenden Entladevorgang die der jeweiligen Batteriezelle entnommene elektrische Energie der Energiequelle und/oder anderen Batteriezellen wieder zugeführt wird. Dadurch ist es möglich, den Energieverbrauch zu reduzieren und/oder eine Systemeffizienz zu erhöhen.

Während des Formierens wird eine Feststoff-Elektrolyt-Interphase (englisch: solid electrolyte interphase, SEI) gebildet, besonders in Bezug auf eine jeweilige Anode der Batteriezelle. Die SEI-Schicht ist empfindlich in Bezug auf verschiedene Faktoren und hat großen Einfluss auf die Batterieeigenschaften beziehungsweise die Batteriezelleneigenschaften während der Nutzungsdauer. In der Regel erfordert die Formierung von Batteriezellen mehrere Zyklen des Auf- und Entladens. Dabei können in Bezug auf eine jeweilige Batteriezelle Spannungen in einem Bereich von zum Beispiel etwa 2 V bis etwa 5 V und elektrische Ströme bis zu mehreren hundert Ampere auftreten. Die Herausforderung ist, hierfür ein möglichst effizientes System anzugeben.

Aktuelle Batteriezellenformierungssysteme nutzen häufig zwei oder drei Stufen zum elektrischen Verbinden der Batteriezellen mit der Energiequelle unter Nutzung von AC/DC-Wandlern und DC/DC-Wandlern zum Aufladen beziehungsweise Entladen der Batteriezellen. Dabei erweist es sich als nachteilig, wenn die Gesamteffizienz des Systems aufgrund der großen Anzahl der zu formierenden Batteriezellen und der dadurch erforderlichen Wandler begrenzt ist. Darüber hinaus sind in der Regel Rückwirkungen des bestimmungsgemäßen Betriebs der Einrichtung auf die Energiequelle, insbesondere das Wechselspannungsnetz, sowie Anforderungen in Bezug auf die elektromagnetische Verträglichkeit zu beachten, die zusätzlichen Aufwand erfordern und die in der Regel den Wirkungsgrad weiter reduzieren.

Der Erfindung liegt die Aufgabe zugrunde, eine verbesserte Einrichtung zum Formieren von aufladbaren Batteriezellen mittels einer Energiequelle anzugeben, die es vorzugsweise erlaubt, zumindest einen besseren Wirkungsgrad oder eine Reduzierung von Netzrückwirkungen zu erreichen.

Diese Aufgabe wird gelöst durch ein Formierungsmodul sowie eine Einrichtung gemäß den unabhängigen Ansprüchen.

Vorteilhafte Weiterbildungen ergeben sich durch Merkmale der abhängigen Ansprüche.

In Bezug auf das Formierungsmodul wird mit der Erfindung insbesondere vorgeschlagen, dass das Formierungsmodul einen Zellenanschluss zum lösbaren elektrischen Verbinden mit einer jeweiligen Batteriezelle, wobei der Zellenanschluss wenigstens einen ersten und einen zweiten Zellenanschlusskontakt aufweist, zwei Modulanschlüsse zum elektrischen Koppeln mit einer elektrischen Energiequelle, zwei erste Reihenschaltungen aus jeweils zwei Schaltelementen, wobei die beiden ersten Reihenschaltungen parallelgeschaltet sind, wobei die beiden ersten Reihenschaltungen jeweils einen Mittelanschluss aufweisen, wobei jeweils einer der Mittelanschlüsse mit jeweils einem der Modulanschlüsse elektrisch gekoppelt ist, wobei ein Ende der ersten Reihenschaltungen mit dem ersten Zellenanschlusskontakt elektrisch gekoppelt ist, und eine zweite Reihenschaltung aufweist, die zwei in Reihe geschaltete Schaltelemente aufweist und die in Parallelschaltung mit den beiden ersten Reihenschaltungen elektrisch gekoppelt ist, wobei ein Mittelanschluss der zweiten Reihenschaltung mit dem zweiten Zellenanschlusskontakt elektrisch gekoppelt ist.

In Bezug auf eine Einrichtung zum Formieren von aufladbaren Batteriezellen mittels einer Energiequelle wird mit der Erfindung insbesondere vorgeschlagen, dass die Einrichtung einen Energiequellenanschluss zum elektrischen Anschließen jeweiliger Phasen des mehrphasigen Wechselspannungsnetzes, der für jede Phase einen Phasenanschluss aufweist, mehrere Formierungsreihenschaltungen, die jeweils einen ersten und einen zweiten Schaltungsanschluss aufweisen, wobei die Schaltungsanschlüsse jeweils mit einer Reihenschaltung aus einer Reihenschaltungsinduktivität und einer Mehrzahl von Formierungsmodulen gemäß der Erfindung elektrisch verbunden sind, aufweist, wobei jeder Phasenanschluss mit dem ersten Schaltungsanschluss von wenigstens einer der Formierungsreihenschaltungen elektrisch gekoppelt ist.

Die Erfindung basiert auf dem Gedanken, ein Konzept eines Mehrpegelenergiewandlers, wie es zum Beispiel in der DE 10 2015 205 267 A1 beschrieben ist, für eine Einrichtung zum Formieren von aufladbaren Batteriezellen umzukonstruieren. Die Erfindung basiert unter anderem auf dem weiteren Gedanken, dass ein jeweiliges Wandlermodul des Mehrpegelenergiewandlers, wie es zum Beispiel die DE 10 2014 219 789 A1 in Figur 3 zeigt oder wie es zum Beispiel aus der DE 10 2014 225 287 A1 bekannt ist, durch einen Zellenanschluss und eine zweite Reihenschaltung aus zwei Schaltelementen ergänzt werden kann, sodass modulseitig eine elektrische Verbindung zu einer Batteriezelle hergestellt werden kann. Auf diese Weise können die Wandlermodule zu Formierungsmodulen umkonstruiert werden. Dabei ist es möglich, das grundlegende Steuerungskonzept für den Mehrpegelenergiewandler im Wesentlichen als Basis für ein Steuerungskonzept der Einrichtung zugrundezulegen. Die Erfindung ermöglicht es, wenigstens eine Wandlerstufe beim Stand der Technik einzusparen. Insbesondere ermöglicht es die Erfindung, die im Stand der Technik üblicherweise vorgesehene galvanische Trennung weitgehend einzusparen. Darüber hinaus kann aufgrund des Mehrpegelenergiewandlersteuerungskonzepts eine netzrückwirkungsarme Energiekopplung zwischen den Batteriezellen und der Energiequelle hergestellt werden. Durch das Vermeiden von AC/DC-Wandlern und Reduzieren von DC/DC-Wandlern kann ein Wirkungsgrad erhöht werden. Dadurch kann auch Aufwand für die Begrenzung von Netzrückwirkungen bei Wechselspannungsnetzen weitgehend reduziert, wenn nicht sogar fast vollständig vermieden, werden. Die gilt gleichermaßen für Aufwand in Bezug auf die elektromagnetische Verträglichkeit. Das erfindungsgemäße Konzept ermöglicht es ferner, während des bestimmungsgemäßen Betriebs Batteriezellen aus der Einrichtung zu entfernen, hinzuzufügen oder auch auszutauschen.

Insofern ist das Formierungsmodul entsprechend ausgebildet, dass die lösbare elektrische Verbindung mit einer jeweiligen Batteriezelle auf einfache Weise realisiert werden kann. Das Formierungsmodul ist vorzugsweise ausgebildet, mit genau einer Batteriezelle elektrisch gekoppelt zu werden. Die Einrichtung weist daher beispielsweise eine der Anzahl der zu formierenden Batteriezellen entsprechende Anzahl von Formierungsmodulen auf. Das Formierungsmodul kann darüber hinaus zum Beispiel einen Spannungssensor, einen Stromsensor, einen Temperatursensor und/oder für die Batteriezelle dergleichen aufweisen. Es kann vorgesehen sein, dass das Formierungsmodul über eine Kommunikationsverbindung mit einer Steuereinheit der Einrichtung in Kommunikationsverbindung steht. Auf diese Weise ist es möglich, die Elemente des Formierungsmoduls, insbesondere dessen Schaltelemente, bedarfsgerecht zu steuern. Zugleich kann erreicht werden, dass gegebenenfalls Sensorsignale der vorgenannten Sensoren an die Steuereinheit übermittelt werden. Dadurch ist für jedes Formierungsmodul die Steuerung eines Formierungsvorgangs für eine jeweilige Batteriezelle individuell möglich.

Die Erfindung ist jedoch nicht darauf beschränkt, dass das Formierungsmodul lediglich eine einzige zweite Reihenschaltung aufweist und lediglich zum Formieren einer einzigen Batteriezelle genutzt wird. Das Formierungsmodul kann natürlich auch wenigstens eine weitere zweite Reihenschaltung aufweisen, wobei die zweiten Reihenschaltungen parallelgeschaltet sind. Entsprechend der Anzahl der weiteren zweiten Reihenschaltungen sind vorzugsweise auch weitere Zellenanschlüsse zum lösbaren elektrischen Kontaktieren von weiteren Batteriezellen vorgesehen, die entsprechend mit den weiteren zweiten Reihenschaltungen elektrisch gekoppelt sind. Dadurch ist es möglich, mit einem einzigen Formierungsmodul mehrere Batteriezellen zu formieren.

Mit der Erfindung kann also erreicht werden, dass der Wirkungsgrad der Einrichtung insgesamt gegenüber dem Stand der Technik deutlich verbessert werden kann. Zugleich ermöglicht es das Steuerungskonzept basierend auf dem Mehrpegelenergiewandler, dass eine zuverlässige Funktionalität auch bei einer großen Vielzahl von Formierungsmodulen beziehungsweise Batteriezellen und unterschiedlichen Betriebszuständen realisiert werden kann. Das Steuerungskonzept hat sich als besonders störfest erwiesen.

Ein Schaltelement im Sinne dieser Offenbarung ist vorzugsweise ein steuerbares elektronisches Schaltelement, beispielsweise ein Transistor, insbesondere mit parallel geschalteten Freilaufdioden, beispielsweise ein Metalloxid-Semiconductor-Field-Effekt-Transistor (MOSFET), ein Insulated-Gate-BipolarTransistor (IGBT), vorzugsweise mit integrierten Freilaufdioden, oder dergleichen. Das Schaltelement wird im Schaltbetrieb betrieben.

Der Schaltbetrieb eines Halbleiterschalters in Form eines Transistors bedeutet, dass in einem eingeschalteten Schaltzustand zwischen den die Schaltstrecke bildenden Anschlüssen des Transistors ein sehr geringer elektrischer Widerstand bereitgestellt wird, sodass ein hoher Stromfluss bei sehr kleiner Restspannung möglich ist. Im ausgeschalteten Schaltzustand ist die Schaltstrecke des Transistors hochohmig, das heißt, sie stellt einen hohen elektrischen Widerstand bereit, sodass auch bei hoher an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb bei Transistoren.

Bezüglich der Schaltelemente ist ferner anzumerken, dass diese in der Regel eine Freilaufdiode aufweisen, sodass der gewünschte Wandlungsbetrieb unterstützt werden kann.

Bezüglich der Funktion der ersten Reihenschaltungen der Formierungsmodule wird ergänzend zum Beispiel auf die DE 10 2014 219 789 A1 beziehungsweise die DE 10 2014 225 287 A1 verwiesen. Das grundlegende Funktionskonzept des Mehrpegelenergiewandlers geht aus diesen Druckschriften hervor, weshalb von detaillierten Erläuterungen hierzu vorliegend abgesehen wird. Der Offenbarungsgehalt der vorgenannten drei Druckschriften gilt als umfasst von der vorliegenden Beschreibung.

Die Erfindung ermöglicht es darüber hinaus, die Einrichtung in hochflexibler Weise mit nahezu beliebig vielen Formierungsmodulen auszurüsten. Die Einrichtung kann daher in hoch flexibler Weise jederzeit bedarfsgerecht angepasst werden.

Es ist vorgesehen, dass die Formierungsmodule zu Formierungsreihenschaltungen zusammengefasst werden, wobei die Anzahl der Formierungsmodule abhängig von der Anzahl der zu formierenden Batteriezellen und einer Wechselspannungsamplitude des mehrphasigen Wechselspannungsnetzes gewählt ist. Das Wechselspannungsnetz kann zum Beispiel ein öffentliches Energieversorgungsnetz sein, welches zum Beispiel eine einphasige oder eine dreiphasige Wechselspannung bereitstellt, die bei einer Frequenz von etwa 50 Hz eine Wechselspannung einer jeweiligen Phase von etwa 230 V bereitstellt. Insbesondere bei einem dreiphasigen Wechselspannungsnetz sind die drei Phasen in ihrer Phasenlage zueinander jeweils um 120° verschoben. Dadurch ergibt sich zwischen zwei jeweiligen Phasen eine Wechselspannung von etwa 400 V. Die Erfindung ist jedoch nicht auf diese Anwendung begrenzt. Das Wechselspannungsnetz kann natürlich auch mehr als drei Phasen oder auch weniger aufweisen, zum Beispiel fünf Phasen, sechs Phasen, sieben Phasen oder auch eine noch größere Anzahl von Phasen. Auch die Frequenz der Wechselspannung kann anders gewählt sein, beispielsweise etwa 60 Hz betragen. Auch der Effektivwert der Wechselspannung kann bedarfsweise variieren. Die Erfindung ist nicht hierauf begrenzt.

Mit der Erfindung ist es somit möglich, auf besonders effektive Weise den Batteriezellen individuell elektrische Energie zum Aufladen zuzuführen beziehungsweise elektrische Energie von den Batteriezellen zur Energiequelle und/oder zu anderen Batteriezellen abzuführen.

Es wird ferner vorgeschlagen, dass parallel zu den Reihenschaltungen eine elektrische Kapazität angeschlossen ist. Durch die elektrische Kapazität kann eine zusätzliche Puffer-Funktionalität erreicht werden, die die Funktion des Formierungsmoduls weiter verbessert. Insbesondere kann die elektrische Kapazität die Funktion des Formierungsmoduls unterstützen, wenn keine Batteriezelle mit dem Formierungsmodul gekoppelt ist. Die elektrische Kapazität kann als elektrischer Kondensator ausgebildet sein. Es kann auch vorgesehen sein, dass die elektrische Kapazität mehr als einen einzigen Kondensator aufweist.

Weiterhin wird vorgeschlagen, dass die elektrische Kopplung zwischen dem zweiten Zellenanschlusskontakt und dem Mittelanschluss der zweiten Reihenschaltung eine elektrische Modulinduktivität aufweist. Dadurch ist es möglich, Stromsprünge beim Koppeln einer jeweiligen Batteriezelle mit dem Formierungsmodul zu reduzieren beziehungsweise zu vermeiden. Insbesondere ist es möglich, Auswirkungen auf die Batteriezelle beziehungsweise das Formierungsmodul zu reduzieren. Sind mehrere zweite Reihenschaltungen vorhanden, ist vorzugsweise für jede der zweiten Reihenschaltungen eine entsprechende Modulinduktivität vorgesehen.

Zugleich kann erreicht werden, dass in Verbindung mit der zweiten Reihenschaltung die Funktion eines DC/DC-Wandlers realisiert wird. Dies ermöglicht es, eine verbesserte Steuerung des Formierungsvorgangs zu erreichen. Insbesondere können eine Formierungsspannung und/oder ein Formierungsstrom nahezu beliebig eingestellt werden. Darüber hinaus ermöglicht es der DC/DC-Wandler, eine Zellenspannung der Batteriezelle an eine jeweilige elektrische Spannung der parallelgeschalteten Reihenschaltungen anzupassen. Dies kann sowohl für den Aufladevorgang als auch für den Entladevorgang der Batteriezelle erreicht werden.

Darüber wird vorgeschlagen, dass das Formierungsmodul ein Gehäuse aufweist, welches eine Zellenaufnahme zum zumindest teilweise lösbaren mechanischen Aufnehmen einer jeweiligen, vorzugsweise genau einer einzigen, Batteriezelle aufweist. Dadurch kann eine mechanische Verbindung der Batteriezelle mit dem Formierungsmodul, insbesondere während des Formierungsvorgangs, erreicht werden. Die Zellenaufnahme kann zum Beispiel als Einschubschacht oder dergleichen ausgebildet sein. Beispielsweise kann der Einschubschacht horizontal ausgerichtet sein, sodass die Zellenaufnahme eine darin angeordnete Batteriezelle zugleich auch zumindest teilweise mechanisch tragen kann. Sie kann auch zumindest teilweise vertikal oder geneigt ausgerichtet sein, sodass die Batteriezelle bereits aufgrund ihrer Gewichtskraft in der Zellenaufnahme gehalten sein kann.

Darüber hinaus wird vorgeschlagen, dass die Zellenanschlusskontakte in der Zellenaufnahme angeordnet und ausgebildet sind, Batteriezellenkontakte einer jeweiligen Batteriezelle im in der Zellenaufnahme angeordneten Zustand elektrisch zu kontaktieren. Dadurch ist es möglich, dass bereits durch das Anordnen der Batteriezelle in der Zellenaufnahme zugleich auch ein elektrischer Anschluss der Batteriezelle am Formierungsmodul ermöglicht ist. Es brauchen somit keine separaten Handlungen diesbezüglich vorgesehen zu werden. Die Zellenanschlusskontakte können diesbezüglich entsprechend ausgebildet sein und zum Beispiel einen oder mehrere Kontaktstifte, eine oder mehrere Kontaktfedern und/oder dergleichen aufweisen.

Es wird ferner vorgeschlagen, dass das Gehäuse einen Temperatursensor aufweist. Mit dem Temperatursensor kann vorzugsweise zumindest teilweise eine Temperatur der Batteriezelle erfasst werden. Dies ermöglicht es, den Formierungsvorgang verbessert zu steuern, insbesondere abhängig von der mittels des Temperatursensors erfassten Temperatur. Der Temperatursensor kann ein Sensorsignal liefern, welches der Steuereinheit der Einrichtung zur Verfügung gestellt werden kann.

Weiterhin wird vorgeschlagen, dass das Gehäuse ein Heizelement aufweist. Mit dem Heizelement kann erreicht werden, dass die Zellenaufnahme und/oder die Batteriezelle auf eine gewünschte Temperatur für den Formierungsvorgang gebracht werden kann. Das Heizelement kann zum Beispiel ein elektrisches Heizelement sein, welches vorzugsweise mit elektrischer Energie der Energiequelle versorgt sein kann.

Darüber hinaus wird vorgeschlagen, dass das Gehäuse wenigstens einen Spannungssensor zum Erfassen einer elektrischen Spannung an der Hilfskapazität oder einen Stromsensor zum Erfassen eines Zellenstroms der Batteriezelle aufweist. Hierdurch können Zustände des Formierungsmoduls und/oder der Batteriezelle ermittelt werden, die ein Steuern des Formierungsprozesses unterstützen können.

In Bezug auf die Einrichtung wird weiterhin vorgeschlagen, dass jeder Phasenanschluss mit dem zweiten Schaltungsanschluss einer derjenigen Formierungsreihenschaltungen elektrisch gekoppelt ist, deren erster Schaltungsanschluss mit einem anderen der Phasenanschlüsse elektrisch gekoppelt ist. Auf diese Weise kann eine Dreieck- beziehungsweise n-Eck-Schaltung der Formierungsreihenschaltungen in Bezug auf das Wechselspannungsnetz erreicht werden. In diesem Zusammenhang wird ferner vorgeschlagen, dass der Energiequellenanschluss für ein dreiphasiges Wechselspannungsnetz ausgebildet ist und die Formierungsreihenschaltungen in Dreieckschaltung an die Phasenanschlüsse angeschlossen sind. Vorzugsweise ist jeweils eine Formierungsreihenschaltung zwischen zwei Phasenanschlüssen angeschlossen. In alternativen Ausgestaltungen kann natürlich auch vorgesehen sein, dass zwischen zwei Phasenanschlüssen auch mehr als eine einzige Formierungsreihenschaltung angeschlossen ist.

Gemäß einer Weiterbildung wird vorgeschlagen, dass die zweiten Schaltungsanschlüsse von solchen Formierungsreihenschaltungen, deren erste Schaltungsanschlüsse jeweils mit einem unterschiedlichen der Phasenanschlüsse elektrisch gekoppelt sind, miteinander elektrisch verbunden sind. Auf diese Weise kann eine Sternschaltung der Formierungsreihenschaltungen erreicht werden. Als besonders vorteilhaft erweist es sich, wenn eine Doppelsternschaltung realisiert werden kann, zum Beispiel auf Basis einer entsprechenden Konstruktion des Mehrpegelenergiewandlers, wie er zuvor im Stand der Technik bereits erläutert ist.

Weiterhin wird vorgeschlagen, dass die Einrichtung eine Anordnungsvorrichtung zum Anordnen der jeweiligen Batteriezelle in einer jeweiligen Zellenaufnahme eines jeweiligen Formierungsmoduls aufweist. Dadurch kann eine automatisierte Bestückung der Einrichtung erreicht werden. Es ist somit möglich, automatisiert Batteriezellen in jeweiligen Formierungsmodulen anzuordnen und vorzugsweise auch von dort nach Beenden eines Formierungsvorgangs wieder zu entnehmen. Dadurch kann eine hohe Automatisierung des Vorgangs insgesamt erreicht werden. Dabei erweist es sich als vorteilhaft, dass für das Anordnen von Batteriezellen ein Unterbrechen des bestimmungsgemäßen Betriebs der Einrichtung nicht erforderlich zu sein braucht. Vielmehr ist es möglich, das Anordnen und Entfernen von Batteriezellen während des bestimmungsgemäßen Betriebs der Einrichtung vorzunehmen. Es ist somit möglich, mittels der Anordnungsvorrichtung seriell einzelne Batteriezellen in jeweiligen Formierungsmodulen anzuordnen beziehungsweise zu entnehmen.

Als besonders vorteilhaft erweist es sich, dass die Anordnungsvorrichtung einen elektrisch isoliert ausgebildeten Zellengreifarm aufweist. Dies erleichtert die Handhabung der Batteriezellen durch die Anordnungsvorrichtung, zumal die Formierungsmodule auf unterschiedlichem elektrischem Potential sein können. Es braucht daher auf das elektrische Potential einer jeweiligen Batteriezelle beim Anordnen beziehungsweise Entnehmen der Batteriezelle keine Rücksicht genommen zu werden. Die Zuverlässigkeit kann dadurch weiter verbessert werden.

Darüber hinaus wird vorgeschlagen, dass die Anordnungsvorrichtung einen Roboter aufweist. Mittels des Roboters kann auf besonders zuverlässige Weise eine hocheffiziente Bedienung der Einrichtung erreicht werden.

Gemäß einer Weiterbildung wird vorgeschlagen, dass wenigstens eine der Formierungsreihenschaltungen ein Hilfsmodul aufweist, das in Reihe zu den Formierungsmodulen geschaltet ist und das zwei Modulanschlüsse zum elektrischen Koppeln mit der elektrischen Energiequelle und zwei erste Reihenschaltungen aus jeweils zwei Schaltelementen aufweist, wobei die beiden ersten Reihenschaltungen parallelgeschaltet sind, wobei die beiden ersten Reihenschaltungen jeweils einen Mittelanschluss aufweisen, wobei jeweils einer der Mittelanschlüsse mit jeweils einem der Modulanschlüsse elektrisch gekoppelt ist, wobei zu den beiden ersten Reihenschaltungen eine elektrische Hilfskapazität parallel geschaltet ist. Das Hilfsmodul kann die Funktionalität der Einrichtung im bestimmungsgemäßen Betrieb weiter unterstützen.

Die für das erfindungsgemäße Formierungsmodul angegebenen Vorteile und Wirkungen gelten natürlich gleichermaßen auch für die erfindungsgemäße Einrichtung und umgekehrt, soweit anwendbar.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.

Unabhängig vom grammatikalischen Geschlecht eines bestimmten Begriffes sind Personen mit männlicher, weiblicher oder anderer Geschlechteridentität mit umfasst.
- FIG 1: ein schematisches Ablaufdiagramm für die Herstellung von aufladbaren Batteriezellen;
- FIG 2: ein schematisches Blockschaltbild einer ersten Einrichtung zum Formieren von aufladbaren Batteriezellen;
- FIG 3: ein schematisches Energieflussdiagramm für die Einrichtung gemäß FIG 2;
- FIG 4: ein schematisches Schaltbild einer zweiten Einrichtung zum Formieren von aufladbaren Batteriezellen;
- FIG 5: ein schematisches Schaltbild eines Formierungsmoduls für die Einrichtung gemäß FIG 4;
- FIG 6: ein schematisches Schaltbild eines Hilfsmoduls für die Einrichtung gemäß FIG 4;
- FIG 7: ein schematisches Schaltbild einer zweiten Einrichtung zum Formieren von aufladbaren Batteriezellen; und
- FIG 8: eine schematische Ansicht der Einrichtung gemäß FIG 4 mit einer Anordnungsvorrichtung zum Anordnen einer jeweiligen Batteriezelle in einer jeweiligen Zellenaufnahme eines jeweiligen Formierungsmoduls, wobei die Anordnungsvorrichtung einen Roboter mit einem elektrisch isoliert ausgebildeten Zellengreifarm aufweist.

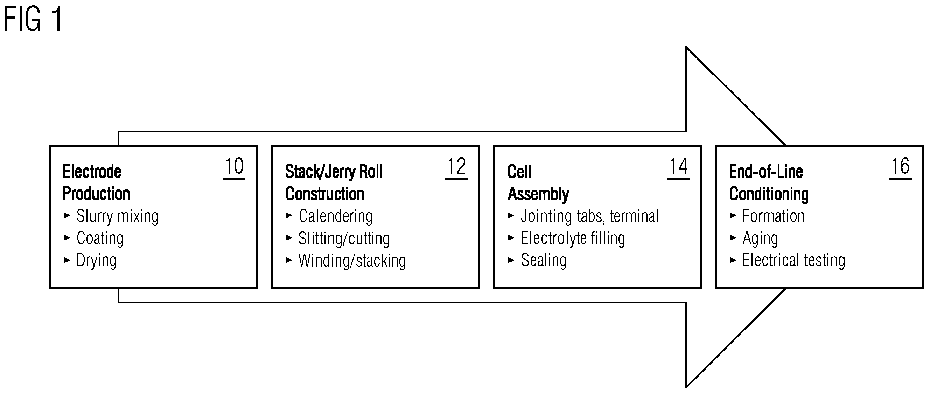

FIG 1 zeigt in einer schematischen Ansicht ein Ablaufdiagramm für die Herstellung von aufladbaren Batteriezellen, die vorliegend durch Lithium-Ion-Zellen gebildet sind. Das Herstellverfahren ist jedoch dem Grunde nach auch für beliebige andere aufladbare Batteriezellen anwendbar.

In einer ersten Stufe 10 werden Elektroden für die Batteriezellen 32 hergestellt. Zu diesem Zweck wird eine entsprechend geeignete Masse gemischt und auf ein Trägermaterial aufgebracht, welches sodann getrocknet wird. In einer zweiten Stufe 12 erfolgt ein Stapeln beziehungsweise Aufrollen des in Stufe 10 hergestellten Materials, wobei das Material kalandriert wird, ein Schneidprozess und ein Wickeln beziehungsweise Stapeln durchgeführt wird. In einer folgenden Stufe 14 erfolgt die Zellenmontage, in dem entsprechend zuvor hergestellte Pakete zusammengefügt werden, Elektrodenanschlüsse angebracht werden, ein Elektrolyt in die Batteriezelle eingeführt wird und die Batteriezelle verschlossen wird. Schließlich folgt in einer Stufe 16 eine abschließende Konditionierung, die unter anderem das Formieren beziehungsweise die Formation der Batteriezellen 32, einen Alterungsprozess sowie einen elektrischen Test umfasst. Mit der Stufe 16 wird die Batteriezelle 32 aktiviert, und es wird erreicht, dass die Batteriezelle 32 ihre elektrische Funktionalität bereitzustellen vermag. Die Aktivierung erfolgt im Wesentlichen durch das Formieren der Batteriezelle 32. Ein Klassifizierungsprozess kann dabei eine Batteriezellenkonsistenz sicherstellen.

Die Formation von Batteriezellen 32 ist ein Vorgang, bei dem erstmalig Auflade- und/oder Entladefunktionen der Batteriezelle 32 ausgeführt werden. Während des Formierens wird eine spezifische elektrochemische SEI-Schicht an der jeweiligen Elektrode der Batteriezelle 32 ausgebildet, und zwar vorliegend hauptsächlich an einer Anode der Batteriezelle 32. Diese Schicht ist empfindlich in Bezug auf eine Mehrzahl von unterschiedlichen Faktoren und hat wesentlichen Einfluss auf die Batterieeigenschaften während der Nutzungsdauer. Das Formieren wird in der Regel in mehreren Auflade- beziehungsweise Entladezyklen der Batteriezelle 32 durchgeführt, wobei Zellenspannungen an Elektroden der Batteriezellen 32 zwischen etwa 2 V bis etwa 5 V und Ströme bis zu etwa mehreren 100 A erreicht werden können. Die Herausforderung ist, hierfür eine effiziente Einrichtung zur Verfügung zu stellen.

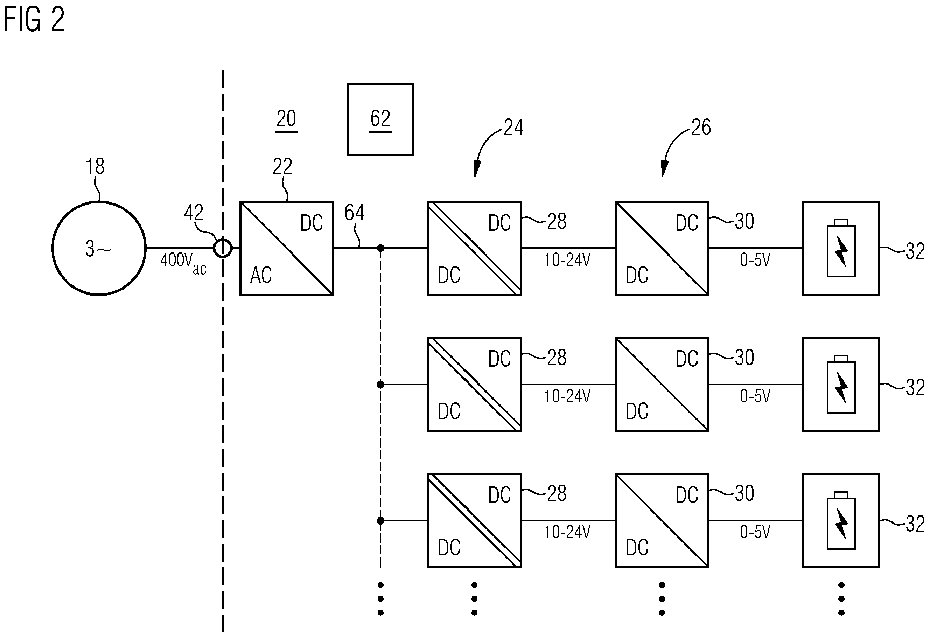

FIG 2 zeigt ein schematisches Blockschaltbild einer ersten Einrichtung 20 zum Formieren von aufladbaren Batteriezellen 32. Die Einrichtung 20 benutzt vorliegend einen dreistufigen Ansatz zur elektrischen Kopplung der Batteriezellen 32 mit einer Energiequelle, die in diesem Ausführungsbeispiel ein dreiphasiges Wechselspannungsnetz 18 bereitstellt. Vorliegend handelt es sich um ein öffentliches Energieversorgungsnetz, bei welchem jede Phasenspannung des Wechselspannungsnetzes 18 etwa 230 V bei etwa 50 Hz beträgt. Die drei Phasenspannungen sind hinsichtlich der Phasenlage jeweils zueinander um 120° phasenverschoben.

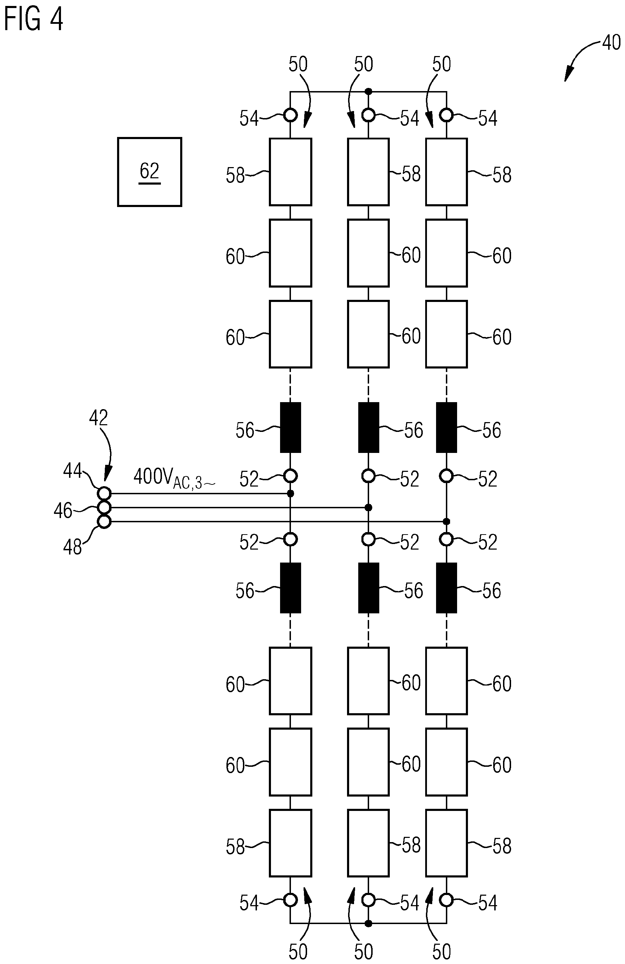

Die Einrichtung 40 weist einen Energiequellenanschluss 42 zum elektrischen Anschließen der jeweiligen Phasen des mehrphasigen Wechselspannungsnetzes 18 auf. Der Energiequellenanschluss 42 weist hierzu Phasenanschlüsse 44, 46, 48 auf, die jeweils mit einer Phase des dreiphasigen Wechselspannungsnetzes 18 elektrisch koppelbar sind (FIG 4).

Die Einrichtung 20 weist ferner einen AC/DC-Wandler 22 auf, dessen Wechselspannungsseite an die Phasenanschlüsse 44, 46, 48 angeschlossen ist. Der AC/DC-Wandler 22 liefert vorliegend eine Gleichspannung in einem Bereich von etwa 600 V bis etwa 800 V. Diese Gleichspannung wird an einem Gleichspannungsnetz 64 bereitgestellt. Der AC/DC-Wandler 22 ist ausgebildet, eine bidirektionale Energiewandlung zu realisieren. Somit ist es möglich, zwischen dem Wechselspannungsnetz 18 und dem Gleichspannungsnetz 64 elektrische Energie auszutauschen.

An das Gleichspannungsnetz 64 ist eine erste Wandlerstufe 24 mit galvanisch trennenden DC/DC-Wandlern 28 angeschlossen. Die DC/DC-Wandler 28 sind ebenfalls hinsichtlich der Energiekopplung bidirektional ausgebildet. Jeder DC/DC-Wandler 28 koppelt das Gleichspannungsnetz 64 und stellt eine Kleinspannung als Gleichspannung bereit, die in einem Bereich von etwa 10 V bis etwa 24 V liegt.

An die erste Wandlerstufe 24 ist eine zweite Wandlerstufe 26 angeschlossen, die DC/DC-Wandler 30 aufweist. An jeweils einem DC/DC-Wandler 28 ist kleinspannungsseitig ein jeweiliger DC/DC-Wandler 30 angeschlossen. Dieser stellt eine Lade- beziehungsweise Entladespannung für eine an diesen anzuschließende Batteriezelle 32 bereit. Auch der DC/DC-Wandler 30 ermöglicht einen bidirektionalen Energieaustausch, und zwar zwischen dem jeweiligen DC/DC-Wandler 28 und der jeweiligen Batteriezelle 32.

Für jede einzelne Batteriezelle 32 ist somit ein Paar aus einem DC/DC-Wandler 28 und einem DC/DC-Wandler 26 vorgesehen.

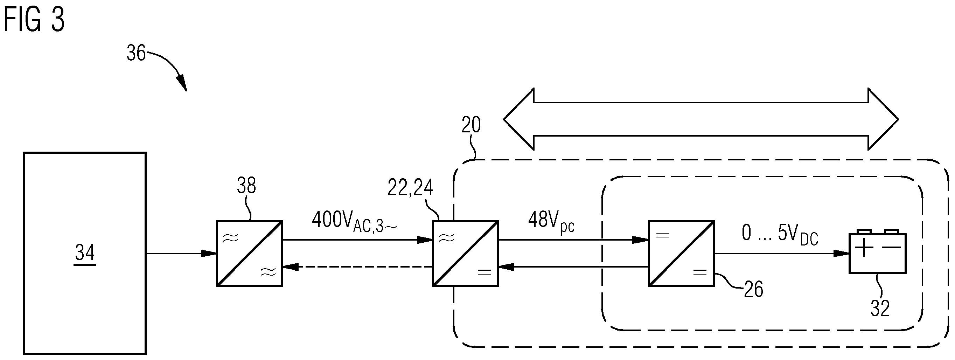

In alternativen Ausgestaltungen, wie es zum Beispiel anhand von FIG 3 dargestellt ist, kann die erste Wandlerstufe 24 auch in den AC/DC-Wandler 22 integriert sein, sodass eine Wandlerstufe eingespart werden kann.

Aufgrund der Schaltungsstruktur gemäß FIG 2 ist es somit möglich, elektrische Energie zwischen den Batteriezellen 32 und dem Wechselspannungsnetz 18 sowie auch zwischen den Batteriezellen 32 auszutauschen. Die elektrische Energie kann insbesondere zumindest teilweise lediglich zwischen den Batteriezellen 32 ausgetauscht werden. Insgesamt werden die verschiedenen Wandler 22, 28, 30 entsprechend von einer Steuereinheit 62 der Einrichtung 20 gesteuert. Nicht dargestellt ist, dass mittels Strom- und/oder Spannungssensoren jeweilige Zustände der Batteriezellen 32 erfasst werden können. Dies kann für die Steuerung der jeweiligen Wandler 22, 28, 30 berücksichtigt werden. Die Wandler 22, 28, 30 werden durch die Steuereinheit 62 entsprechend gesteuert.

FIG 3 zeigt in einer schematischen Darstellung eine weitere Ausgestaltung, die auf der Konstruktion gemäß FIG 2 basiert, weshalb diesbezüglich auf die entsprechenden vorhergehenden Ausführungen ergänzend verwiesen wird. Bei dieser Ausgestaltung ist vorgesehen, dass der AC/DC-Wandler 22 hier auch gleich die Funktion der ersten Wandlerstufe 24 aus FIG 2 mit realisiert, weshalb hier gleichspannungsseitig ein Gleichspannungsnetz mit einer Gleichspannung von etwa 48 V bereitgestellt wird. An dieses Gleichspannungsnetz sind die DC/DC-Wandler 26 angeschlossen, die jeweils wieder mit einer jeweiligen Batteriezelle 32 elektrisch verbindbar sind.

Aus FIG 3 ist ersichtlich, dass die Einrichtung 20 über einen dreiphasigen Transformator 38 an eine elektrische Energiequelle 36 angeschlossen ist, die vorliegend ein dreiphasiges Wechselspannungsnetz bereitstellt, welches mit Mittelspannung in einem Bereich von etwa 3 kV bis etwa 36 kV betrieben wird. Der Transformator 38 ist primärseitig an das Wechselspannungsnetz angeschlossen und stellt sekundärseitig eine dreiphasige Wechselspannung bereit, wie sei bereits anhand von FIG 2 in Bezug auf das Wechselspannungsnetz 18 erläutert wurde.

Unter Berücksichtigung der Wirkungsgrade der einzelnen Komponenten, wie sie anhand der FIG 2 und 3 erläutert wurden, ist in Bezug auf einen Aufladevorgang von Batteriezellen 32 ein Wirkungsgrad von etwa 82% erreichbar. Für die Rückführung von Energie in das Wechselspannungsnetz 34, beispielsweise im Bereich der Rekuperation, kann ein Wirkungsgrad von etwa 81% erreicht werden. Dies ist durch den breiten Doppelpfeil in FIG 3 gezeigt. Bei den anzusetzenden Leistungen unter Berücksichtigung der Vielzahl der zu formierenden Batteriezellen 32 kann bereits eine kleine Änderung des Wirkungsgrads große Auswirkungen auf die Gesamteffizienz haben. Eine Vergrößerung des Wirkungsgrads erlaubt es, die benötigte Leistung zu reduzieren, den Aufwand für die Energieversorgung zu reduzieren und auch den Aufwand zum Abführen von Verlustenergie, beispielsweise einen Kühlaufwand, zu reduzieren. Bei der Größenordnung der umzusetzenden Leistung können somit bereits kleine Änderungen am Wirkungsgrad relevant sein.

Um den Wirkungsgrad zu erhöhen, wird eine zweite Einrichtung 40 vorgeschlagen, die ebenfalls dem Formieren von aufladbaren Batteriezellen 32 mittels der Energiequelle dient. Die Energiequelle stellt - wie bei der ersten Einrichtung 20 - ein dreiphasiges Wechselspannungsnetz 18 bereit. Die Einrichtung 40 weist ebenfalls einen Energiequellenanschluss 42 zum elektrischen Anschließen jeweiliger Phasen des dreiphasigen Wechselspannungsnetzes 18 auf, wobei der Energiequellenanschluss 42 für jede Phase einen jeweiligen Phasenanschluss 44, 46, 48 aufweist. Die Einrichtung 40 weist ferner sechs Formierungsreihenschaltungen 50 auf, die jeweils einen ersten und einen zweiten Schaltungsanschluss 52, 54 aufweisen. Die Schaltungsanschlüsse 52, 54 einer jeweiligen Formierungsreihenschaltung 50 sind jeweils mit einer Reihenschaltung aus einer Reihenschaltungsinduktivität 56 und einer Mehrzahl von Formierungsmodulen 60 sowie jeweils einem Hilfsmodul 58 elektrisch verbunden. Jeder Phasenanschluss 44, 46, 48 ist mit dem jeweiligen ersten Schaltungsanschluss 52 von wenigstens einer der Formierungsreihenschaltungen 50 elektrisch gekoppelt.

Die jeweiligen zweiten Schaltungsanschlüsse 54 von solchen Formierungsreihenschaltungen 50, deren erste Schaltungsanschlüsse 52 jeweils mit einem unterschiedlichen der Phasenanschlüsse 44, 46, 48 elektrisch gekoppelt sind, sind miteinander elektrisch verbunden. Auf diese Weise werden zwei Sternschaltungen erzeugt. Die Schaltungsstruktur ist in FIG 4 dargestellt.

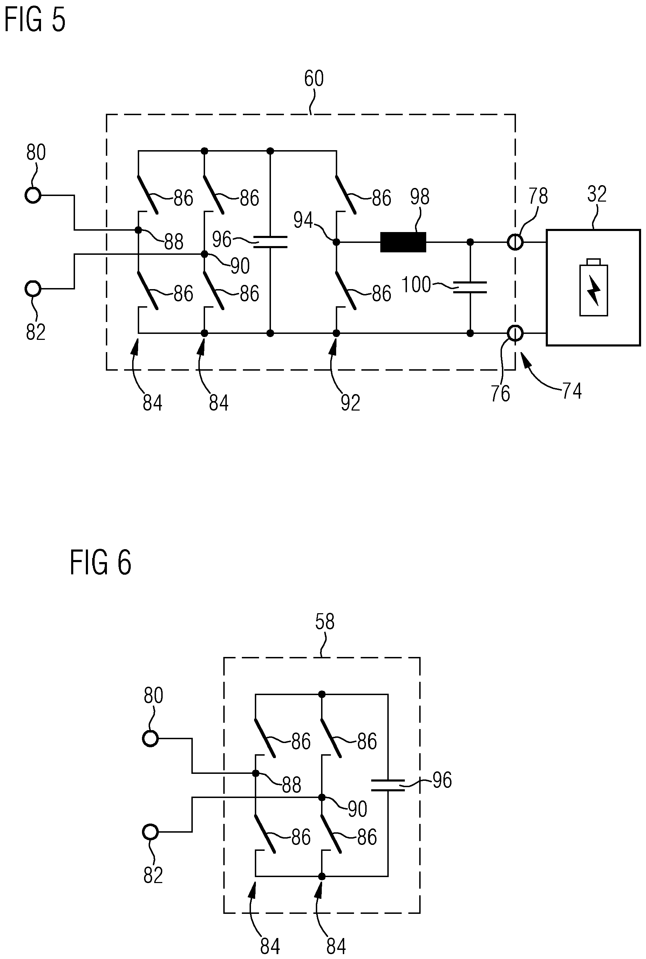

FIG 5 zeigt eine schematische Schaltbilddarstellung eines Formierungsmoduls 60, wie es in den Formierungsreihenschaltungen 50 in FIG 4 eingesetzt wird. Das Formierungsmodul 60 weist einen Zellenanschluss 74 zum lösbaren elektrischen Verbinden mit einer jeweiligen Batteriezelle 32 auf, wobei der Zellenanschluss 74 einen ersten und einen zweiten Zellenanschlusskontakt 76, 78 aufweist. Ferner weist das Formierungsmodul 60 zwei Modulanschlüsse 80, 82 zum elektrischen Koppeln mit der elektrischen Energiequelle auf. Hier dienen die Modulanschlüsse 80, 82 zum Realisieren der jeweiligen Formierungsreihenschaltung 50.

Das Formierungsmodul 60 weist ferner zwei erste Reihenschaltungen 84 aus jeweils zwei Schaltelementen 86 auf. Die beiden ersten Reihenschaltungen 84 sind parallelgeschaltet. Die beiden ersten Reihenschaltungen 84 weisen jeweils einen Mittelanschluss 88, 90 auf. Jeweils einer der Mittelanschlüsse 88, 90 ist mit jeweils einem der Modulanschlüsse 80, 82 elektrisch gekoppelt. Ein Ende der ersten Reihenschaltungen 84 ist mit dem ersten Zellenanschlusskontakt 76 elektrisch gekoppelt. Vorliegend sind die Schaltelemente 86 gleich ausgebildet.

Das Formierungsmodul 60 weist ferner eine zweite Reihenschaltung 92 auf, die zwei in Reihe geschaltete Schaltelemente 86 aufweist, die im Wesentlichen den Schaltelementen 86 der ersten Reihenschaltungen 84 entsprechen. Die zweite Reihenschaltung 92 ist in Parallelschaltung mit den beiden ersten Reihenschaltungen 84 elektrisch gekoppelt. Ein Mittelanschluss 94 der zweiten Reihenschaltung 92 ist mit dem zweiten Zellenanschluss 78 elektrisch gekoppelt.

Die Schaltelemente 86 sind vorliegend durch Transistoren gebildet, die im Schaltbetrieb betrieben werden. Jeder der Transistoren weist nicht dargestellte eine Inversdiode auf, die intern in jedem Transistor parallelgeschaltet ist. Die Erfindung ist jedoch nicht auf diese Art der Schaltelemente begrenzt. Dem Grunde nach wäre sie auch mit geeigneten anderen elektronischen Schaltelementen nutzbar. Vorliegend ist vorgesehen, dass die Transistoren durch entsprechend ausgebildete IGBTs gebildet sind. Ebenso kann eine Ausgestaltung unter Nutzung von MOSFETs vorgesehen sein.

Parallel zu den Reihenschaltungen 84, 92 ist ferner ein Kondensator 96 angeschlossen. Weiterhin weist die elektrische Kopplung zwischen dem zweiten Zellenanschlusskontakt 78 und dem Mittelanschluss 94 der zweiten Reihenschaltung 92 eine elektrische Modulinduktivität 98 auf. An die Zellenanschlusskontakte 76, 78 ist ferner ein Kondensator 100 angeschlossen. Durch diese Konstruktion kann eine Wandlerfunktionalität erreicht werden, wie sie mittels der DC/DC-Wandler 30 der Einrichtung 20 gemäß FIG 2 realisiert werden kann. Die hierdurch gebildete Wandlerfunktionalität kann zur Realisierung eines bidirektionalen Energieflusses betrieben werden, das heißt, die Batteriezelle 32 kann sowohl aufgeladen als auch entladen werden. Zu diesem Zweck kann die Wandlerfunktionalität zum Beispiel als Hochsetzsteller oder auch als Tiefsetzsteller realisiert werden, je nach Bedarf. Die grundlegende Funktion der Wandlerfunktionalität ist dem Fachmann bekannt, weshalb von detaillierten Erläuterungen hierzu abgesehen wird.

FIG 6 zeigt ein Hilfsmodul 58, dessen Konstruktion und Funktionalität auf dem Formierungsmodul 60 basiert, weshalb ergänzend auf die diesbezüglichen Ausführungen verwiesen wird. Das Hilfsmodul 58 unterscheidet sich vom Formierungsmodul 60 dadurch, dass es lediglich die ersten Reihenschaltungen 84 und den Kondensator 96 aufweist. An das Hilfsmodul 58 kann keine Batteriezelle 32 angeschlossen werden.

Aus FIG 4 ist ersichtlich, dass jede der Reihenschaltungen 50 neben der Reihenschaltung aus der Reihenschaltungsinduktivität 56 und den Formierungsmodulen 60 jeweils ein Hilfsmodul 58 aufweist. Die Reihenschaltung der Module 58, 60 erfolgt anhand der Modulanschlüsse 80, 82. Die Module 58, 60 sind signaltechnisch mit der Steuereinheit 62 gekoppelt, sodass die Schaltzustände der Schaltelemente 86 mittels der Steuereinheit 62 bedarfsgerecht eingestellt werden können. Das Hilfsmodul 58 ist vorzugsweise optional vorgesehen und kann unter Umständen vorteilhaft ungünstige Verhältnisse in Bezug auf die Netzspannung und eine Anzahl der Formierungsmodule ausgleichen.

Nicht dargestellt ist in den Figuren, dass die Formierungsmodule 60 im Bereich des Zellenanschlusses 74 mittels eines Spannungssensors eine Zellenspannung der Batteriezelle 32 im angeschlossenen Zustand erfassen können. Ferner ist ein Stromsensor vorgesehen, mittels welchem ein Zellenstrom der Batteriezelle 32 erfasst werden kann. Entsprechende Sensorsignale werden über eine nicht dargestellte Kommunikationsverbindung an die Steuereinheit 62 übermittelt. Dadurch ist es der Steuereinheit 62 möglich, unter anderem einen Zustand der Batteriezelle 32 zu ermitteln und/oder zu ermitteln, ob an das entsprechende Formierungsmodul 60 eine Batteriezelle 32 angeschlossen ist.

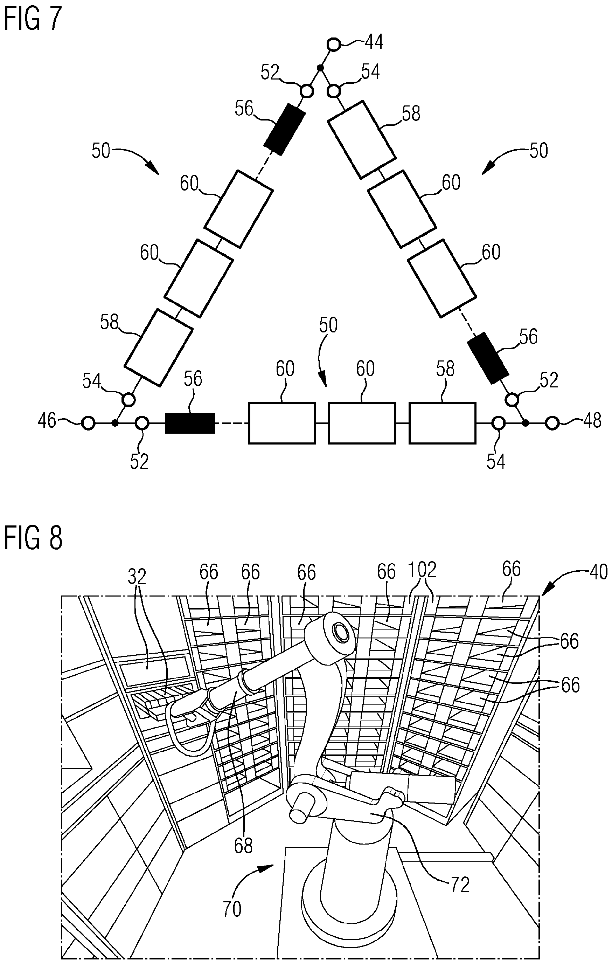

FIG 7 zeigt eine alternative Ausgestaltung für eine Schaltungsstruktur der Einrichtung 40, bei der jeder Phasenanschluss 44, 46, 48 mit dem zweiten Schaltungsanschluss 54 einer derjenigen Formierungsreihenschaltungen 50 elektrisch gekoppelt ist, deren erster Schaltungsanschluss 52 mit einem anderen der Phasenanschlüsse 44, 46, 48 gekoppelt ist. Da es vorliegend vorgesehen ist, dass das Wechselspannungsnetz 18 ein dreiphasiges Wechselspannungsnetz ist, ist vorliegend die Schaltungsstruktur einer Dreieckschaltung realisiert. Für die Funktion der Erfindung ist dies jedoch nicht begrenzend. Zu den Formierungsreihenschaltungen 50, die in FIG 7 dargestellt sind, können natürlich auch weitere Formierungsreihenschaltungen 50 parallelgeschaltet werden, ohne den Gedanken der Erfindung zu verlassen. Bezüglich der weiteren Merkmale und Funktionen wird auf die entsprechenden obigen Ausführungen, insbesondere zur Einrichtung 40 gemäß FIG 4, verwiesen.

FIG 8 zeigt in einer schematischen Darstellung einen konkreten Aufbau, wie er für die Formierungseinrichtung 40 realisiert werden kann. Zu erkennen ist, dass Formierungsmodule 60 in mehreren Stapeln nebeneinander angeordnet sind. Diese sind nach Art eines n-Ecks zumindest abschnittsweise angeordnet. Zentral ist eine Anordnungsvorrichtung 70 mit einem Roboter 72 vorgesehen, der einen Zellengreifarm 68 bereitstellt. Der Zellengreifarm 68 ist elektrisch isoliert ausgebildet.

Mit dem Zellengreifarm 68 und dem Roboter 72 ist es möglich, bedarfsweise die Formierungsmodule 60 mit Batteriezellen 32 zu bestücken beziehungsweise Batteriezellen 32 aus den Formierungsmodulen 60 zu entnehmen, bei denen der Formierungsvorgang abgeschlossen ist. Dadurch kann eine hocheffiziente Einrichtung 40 geschaffen werden, die es ermöglicht, während des bestimmungsgemäßen Betriebs nahezu beliebig eine Veränderung an der Bestückung mit den Batteriezellen 32 vorzunehmen. Zugleich kann durch die elektrisch isolierende Ausführung des Zellengreifarms 68 erreicht werden, dass Anforderungen hinsichtlich der elektrischen Sicherheit auf einfache Weise realisiert werden können.

Aus FIG 8 ist ferner ersichtlich, dass jedes Formierungsmodul 60 ein Gehäuse 102 aufweist. Das Gehäuse 102 stellt eine Zellenaufnahme 66 bereit. Nicht zu entnehmen aus FIG 8 ist, dass der Zellenanschluss 74 im Bereich der Zellenaufnahme 66 ausgebildet ist. Dadurch kann durch einfaches Einschieben einer Batteriezelle 32 in die Zellenaufnahme 66 eine lösbare elektrische Verbindung mit dem Formierungsmodul 60 automatisch hergestellt werden. Zu diesem Zweck können entsprechende Kontaktstifte beziehungsweise Kontaktfedern oder dergleichen vorgesehen sein.

In weiteren alternativen Ausgestaltungen brauchen die Formierungsreihenschaltungen 50 nicht zwingend ein Hilfsmodul 58 aufzuweisen. Gegebenenfalls ist die Steuerung 62 entsprechend anzupassen.

Die Ausführungsbeispiele dienen ausschließlich der Erläuterung der Erfindung und sollen diese nicht beschränken.

### Bezugszeichenliste

- 10: Stufe
- 12: Stufe
- 14: Stufe
- 16: Stufe
- 18: Wechselspannungsnetz
- 20: erste Einrichtung
- 22: AC/DC-Wandler
- 24: erste Wandlerstufe
- 26: zweite Wandlerstufe
- 28: galvanisch trennender DC/DC-Wandler
- 30: DC/DC-Wandler
- 32: Batteriezelle
- 34: Mittelspannungsnetz
- 36: Energiequelle
- 38: Transformator
- 40: zweite Einrichtung
- 42: Energiequellenanschluss
- 44: Phasenanschluss
- 46: Phasenanschluss
- 48: Phasenanschluss
- 50: Formierungsreihenschaltung
- 52: erster Schaltungsanschluss
- 54: zweiter Schaltungsanschluss
- 56: Reihenschaltungsinduktivität
- 58: Hilfsmodul
- 60: Formierungsmodul
- 62: Steuereinheit
- 64: Gleichspannungsnetz
- 66: Zellenaufnahme
- 68: Zellengreifarm
- 70: Anordnungsvorrichtung
- 72: Roboter
- 74: Zellenanschluss
- 76: erster Zellenanschlusskontakt
- 78: zweiter Zellenanschlusskontakt
- 80: Modulanschluss
- 82: Modulanschluss
- 84: erste Reihenschaltung
- 86: Schaltelement
- 88: Mittelanschluss
- 90: Mittelanschluss
- 92: zweite Reihenschaltung
- 94: Mittelanschluss
- 96: Kondensator
- 98: Modulinduktivität
- 100: Kondensator
- 102: Gehäuse

## Patentansprüche

1. Formierungsmodul (60) für eine Einrichtung (40) zum Formieren von aufladbaren Batteriezellen (32), mit:
- einem Zellenanschluss (74) zum lösbaren elektrischen Verbinden mit einer jeweiligen Batteriezelle (32), wobei der Zellenanschluss (74) wenigstens einen ersten und einen zweiten Zellenanschlusskontakt (76, 78) aufweist,
- zwei Modulanschlüssen (80, 82) zum elektrischen Koppeln mit einer elektrischen Energiequelle,
- zwei ersten Reihenschaltungen (84) aus jeweils zwei Schaltelementen (86), wobei die beiden ersten Reihenschaltungen (84) parallelgeschaltet sind, wobei die beiden ersten Reihenschaltungen (84) jeweils einen Mittelanschluss (88, 90) aufweisen, wobei jeweils einer der Mittelanschlüsse (88, 90) mit jeweils einem der Modulanschlüsse (80, 82) elektrisch gekoppelt ist, wobei ein Ende der ersten Reihenschaltungen (84) mit dem ersten Zellenanschlusskontakt (76) elektrisch gekoppelt ist, und
- einer zweiten Reihenschaltung (92), die zwei in Reihe geschaltete Schaltelemente (86) aufweist und die in Parallelschaltung mit den beiden ersten Reihenschaltungen (84) elektrisch gekoppelt ist, wobei ein Mittelanschluss (94) der zweiten Reihenschaltung (92) mit dem zweiten Zellenanschlusskontakt (78) elektrisch gekoppelt ist.

2. Formierungsmodul nach Anspruch 1, **dadurch gekennzeichnet, dass** parallel zu den Reihenschaltungen (84, 92) eine elektrische Hilfskapazität (96) angeschlossen ist.

3. Formierungsmodul nach einem der vorhergehenden Anschlüsse, **dadurch gekennzeichnet, dass** die elektrische Kopplung zwischen dem zweiten Zellenanschlusskontakt (78) und dem Mittelanschluss (94) der zweiten Reihenschaltung (92) eine elektrische Modulinduktivität (98) aufweist.

4. Formierungsmodul nach einem der vorhergehenden Anschlüsse, **gekennzeichnet durch** ein Gehäuse (102), welches eine Zellenaufnahme (66) zum zumindest teilweisen lösbaren mechanischen Aufnehmen einer jeweiligen Batteriezelle (32) aufweist.

5. Formierungsmodul nach Anspruch 4, **dadurch gekennzeichnet, dass** die Zellenanschlusskontakte (76, 78) in der Zellenaufnahme (66) angeordnet und ausgebildet sind, Batteriezellenkontakte einer jeweiligen Batteriezelle (32) im in der Zellenaufnahme angeordneten Zustand elektrisch zu kontaktieren.

6. Formierungsmodul nach Anspruch 4 oder 5, **dadurch gekennzeichnet, dass** das Gehäuse (102) einen Temperatursensor aufweist.

7. Formierungsmodul nach einem der Ansprüche 4 bis 6, **dadurch gekennzeichnet, dass** das Gehäuse (102) wenigstens einen Spannungssensor zum Erfassen einer elektrischen Spannung an der Hilfskapazität (96) oder einen Stromsensor zum Erfassen eines Zellenstroms der Batteriezelle (32) aufweist.

8. Einrichtung (40) zum Formieren von aufladbaren Batteriezellen (32) mittels einer Energiequelle, die ein mehrphasiges Wechselspannungsnetz (18) bereitstellt, mit:
- einem Energiequellenanschluss (42) zum elektrischen Anschließen jeweiliger Phasen des mehrphasigen Wechselspannungsnetzes (18), der für jede Phase einen Phasenanschluss (44, 46, 48) aufweist, und
- mehreren Formierungsreihenschaltungen (50), die jeweils einen ersten und einen zweiten Schaltungsanschluss (52, 54) aufweisen, wobei die Schaltungsanschlüsse (52, 54) jeweils mit einer Reihenschaltung aus einer Reihenschaltungsinduktivität (56) und einer Mehrzahl von Formierungsmodulen (60) nach einem der vorhergehenden Ansprüche elektrisch verbunden sind,
- wobei jeder Phasenanschluss (44, 46, 48) mit dem ersten Schaltungsanschluss (52) von wenigstens einer der Formierungsreihenschaltungen (50) elektrisch gekoppelt ist.

9. Einrichtung nach Anspruch 8, **dadurch gekennzeichnet, dass** jeder Phasenanschluss (44, 46, 48) mit dem zweiten Schaltungsanschluss (54) einer derjenigen Formierungsreihenschaltungen (50) elektrisch gekoppelt ist, deren erster Schaltungsanschluss (52) mit einem anderen der Phasenanschlüsse (44, 46, 48) elektrisch gekoppelt ist.

10. Einrichtung nach Anspruch 9, **dadurch gekennzeichnet, dass** der Energiequellenanschluss (42) für ein dreiphasiges Wechselspannungsnetz (18) ausgebildet ist und die Formierungsreihenschaltungen (50) in Dreieckschaltung an die Phasenanschlüsse (44, 46, 48) angeschlossen sind.

11. Einrichtung nach einem der Ansprüche 8 bis 10, **dadurch gekennzeichnet, dass** die zweiten Schaltungsanschlüsse (54) von solchen Formierungsreihenschaltungen (50), deren erste Schaltungsanschlüsse (52) jeweils mit einem unterschiedlichen der Phasenanschlüsse (44, 46, 48) elektrisch gekoppelt sind, miteinander elektrisch verbunden sind.

12. Einrichtung nach einem der Ansprüche 8 bis 11, **gekennzeichnet durch** eine Anordnungsvorrichtung (70) zum Anordnen einer jeweiligen Batteriezelle (32) in einer jeweiligen Zellenaufnahme (66) eines jeweiligen Formierungsmoduls (60).

13. Einrichtung nach Anspruch 12, **dadurch gekennzeichnet, dass** die Anordnungsvorrichtung (70) einen elektrisch isoliert ausgebildeten Zellengreifarm (68) aufweist.

14. Einrichtung nach Anspruch 12 oder 13, **dadurch gekennzeichnet, dass** die Anordnungsvorrichtung (70) einen Roboter (72) aufweist.

15. Einrichtung nach einem der Ansprüche 8 bis 14, **dadurch gekennzeichnet, dass** wenigstens eine der Formierungsreihenschaltungen (50) ein Hilfsmodul (58) aufweist, das in Reihe zu den Formierungsmodulen (60) geschaltet ist und das zwei Modulanschlüsse (80, 82) zum elektrischen Koppeln mit der elektrischen Energiequelle und zwei erste Reihenschaltungen (84) aus jeweils zwei Schaltelementen (86) aufweist, wobei die beiden ersten Reihenschaltungen (84) parallelgeschaltet sind, wobei die beiden ersten Reihenschaltungen (84) jeweils einen Mittelanschluss (88, 90) aufweisen, wobei jeweils einer der Mittelanschlüsse (88, 90) mit jeweils einem der Modulanschlüsse (80, 82) elektrisch gekoppelt ist, wobei zu den beiden ersten Reihenschaltungen (84) eine elektrische Hilfskapazität (96) parallelgeschaltet ist.
